# EUROPEAN PATENT APPLICATION

(11) **EP 4 821 582 A1**
(43) Date of publication of application: **14.10.2026**
(21) Application number: 25169437.8
(22) Date of filing: 09.04.2025
(51) Int. Cl.: B01D 51/00, B01D 53/047, B01D 53/053

(54) **PROCESS AND APPARATUS FOR TREATING A GAS MIXTURE CONTAINING CARBON DIOXIDE**

(71) Applicant: Linde GmbH, 82049 Pullach (DE)
(72) Inventor: Kossmann, Andreas, 82049 Pullach (DE); Ried, Thomas, 82049 Pullach (DE); Kontogeorgopoulos, Eythymios, 82049 Pullach (DE); Leitmayr, Werner, 82049 Pullach (DE)
(74) Representative: Lu, Jing

(57) **Abstract**

A process (100) for treating a gas mixture comprising carbon dioxide is proposed, wherein the gas mixture is compressed in a compression unit (102) to form a compressed gas mixture, the process comprising a first operating mode wherein a partial stream of the compressed gas mixture is stored in a buffer unit (103) and a second operating mode wherein a part of the compressed gas mixture stored in the buffer unit (103) in the first operating mode is withdrawn therefrom and recycled to the process (100) at a position upstream of the compression unit. A corresponding apparatus is also provided.

## Description

### Field

The present disclosure relates to a process for treating a gas mixture containing carbon dioxide and to a corresponding apparatus.

### Background

Existing technologies for the separation of carbon dioxide from gas mixtures such as flue gases are based either on absorptive (scrubbing) processes and require heat, particularly steam, to regenerate the absorbent, or alternatively on a combination of adsorptive and cryogenic steps.

For example, EP 4 321 234 A1 discloses a process and an apparatus for the separation of carbon dioxide from a gas mixture, comprising a first non-cryogenic separation step, a second non-cryogenic separation step, and a cryogenic separation step, wherein the first non-cryogenic separation step and the second non-cryogenic separation step are pressure swing adsorption steps or the first non-cryogenic separation step is a pressure swing adsorption step and the second non-cryogenic separation step is a membrane separation step. Further processes are disclosed in WO 2023/117130 A1, US 8,216,344 A, US 2010/0024476 A1 and US 8,021,464 A.

There is a need for improvements in processes and an apparatus for the separation of carbon dioxide from gas mixtures, as also explained further below.

### Summary

A process for treating a gas mixture containing carbon dioxide and a corresponding apparatus including the features of the independent claims are proposed herein. Embodiments are set forth in the dependent claims and the description that follows.

In the process for treating a gas mixture comprising carbon dioxide provided herein, the gas mixture is compressed in a compression unit to form a compressed gas mixture. The process comprises a first operating mode wherein a partial stream of the compressed gas mixture is stored in a buffer unit and a second operating mode wherein a part of the compressed gas mixture stored in the buffer unit in the first operating mode is withdrawn therefrom and recycled to the process at a position upstream of the compression unit.

The compression in the compression unit referred to above may particularly the first compression step after the gas mixture has been produced, e.g., by combustion as flue gas and/or by reacting a hydrocarbon feed, wherein steps such as cooling the gas mixture, e.g., by direct contact cooling, has been performed. Said compression unit is therefore also referred to as "first" compression unit below.

The compression in the compression unit may particularly be performed from a first pressure level to a second pressure level, wherein the first pressure level may be an atmospheric or "pressureless" pressure level, or, more generally, a pressure level between 0.5 and 1.5 bar absolute pressure, and the second pressure level may be a pressure level higher than the first pressure level and particularly between 2 and 10 bar absolute pressure. The compressed gas mixture may particularly be provided at the second pressure level.

As to different embodiments of buffer units, which may be used in the proposed method, reference is made to the explanations below.

In the process proposed herein, the buffer unit may be operated in a "pressure swing" operation, i.e., the buffer unit is filled from the pressure side of the compression unit, at the second pressure level, and the buffer unit is discharged to the suction side or a point upstream thereof, at the first pressure level. This makes use of the increased pressure compared to the typically pressureless feed stream to the process. During an operating state with a high carbon dioxide content, the gas mixture may be stored in the buffer unit. During an operating state with a low carbon dioxide content and a low flow of the gas mixture, the stored gas mixture may be fed from the buffer unit to a position upstream of the compression unit. On the one hand, the carbon dioxide content of the gas stream sent to compressor unit may be increased by adding buffered gas rich in carbon dioxide. On the other hand, the flow to the first compressor unit may be prevented from dropping so low that the anti-surge protection control typically present intervenes.

In certain embodiments proposed herein, the gas mixture compressed in the compression unit may be formed from a feed gas which is provided to the process in the first operating mode in a larger amount and/or with a different carbon dioxide content than in the second operating mode. The process according to the present invention allows to equalize these differences.

In certain embodiments proposed herein, the process includes switching from the first operating mode to the second operating mode or vice versa on the basis of an amount, pressure, temperature and/or carbon dioxide content of the gas mixture. This allows for reliably operating a corresponding process, e.g., including sensor values.

In certain embodiments proposed herein, the gas mixture is formed by a gas producing unit, wherein the gas producing unit is a lime kiln unit or cement plant and the gas mixture is a flue gas therefrom. Other processes may also be used to form the gas mixture, and may likewise take profit from the process and its embodiments. A lime kiln, if used, may include one or more Parallel Flow Reactors which may take particular profit of the instrumentalities as proposed herein, as explained below.

In certain embodiments proposed herein, the process includes switching from the first operating mode to the second operating mode on the basis of a signal provided by the gas producing unit, e.g., from a lime kiln. Such a signal may include, e.g., an intended switching between operating modes thereof.

In certain embodiments proposed herein, a part of the compressed gas mixture is treated in a plurality of separation steps, the plurality of separation steps including one or more pressure swing adsorption steps and one or more cryogenic separation steps. Instrumentalities proposed herein allow for operating such separation steps without interception and/or major changes.

In certain embodiments proposed herein, the plurality of separation steps comprise a first non-cryogenic separation step, a second non-cryogenic separation step, and a cryogenic separation step, wherein the first non-cryogenic separation step and the second non-cryogenic separation step are pressure swing adsorption steps or the first non-cryogenic separation step is a pressure swing adsorption step and the second non-cryogenic separation step is a membrane separation step. This allows for improving processes of the prior art mentioned at the outset.

The apparatus for treating a gas mixture comprising carbon dioxide proposed herein comprises a compression unit configured to compress the gas mixture to form a compressed gas mixture, and further comprises a buffer unit. The apparatus is configured to be operated in a first operating mode wherein a partial stream of the compressed gas mixture is stored in the buffer unit and a second operating mode wherein a part of the compressed gas mixture stored in the buffer unit in the first operating mode is withdrawn therefrom and recycled to the process at a position upstream of the compression unit.

For further details and advantages of the proposed apparatus and its embodiments, reference is made to the explanations above and below relating to the proposed process and its embodiments.

### Figures

Aspects of certain embodiments disclosed herein will now further be described with reference to the appended drawings, wherein
Figure 1 schematically shows a process overview for treating a gas mixture containing carbon dioxide according to an embodiment; and
Figure 2 schematically illustrates properties of a gas mixture containing carbon dioxide treatable according to an embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

The conjunction "and/or" is to be understood, when used in a list before the last element of the list, to mean that all items of the list can be combined with each other in any way. In other words, "A, B and/or C" means "A and/or B and/or C" or "at least one of the elements A, B, C in any combination".

The terms used in the context of the present disclosure generally have the meanings recognised in the art. For the terms used here, reference is made to technical literature.

Aspects disclosed herein may find application for different gas mixtures containing carbon dioxide, such as, but not limited to, flue gases and synthesis gases. If reference is made to a "flue gas" hereinbelow, therefore, this reference is intended to include other gas mixtures including carbon dioxide as well.

The separation of carbon dioxide from gas mixtures as mentioned above may be performed in order to be able to either sequester the carbon dioxide or to provide the carbon dioxide to other uses. In both cases, it is necessary to obtain the carbon dioxide with a specified purity. In other cases, alternatively or additionally, a particularly high carbon capture rate is desired. For both purposes, conventionally the gas mixture may be subjected to an amine scrubbing process that is typically capable of separating more than 99% of the carbon dioxide contained in a synthesis gas or 95 to 98% of the carbon dioxide contained in a flue gas.

For example, depending on whether the synthesis gas or the flue gas produced in steam reforming is subjected to amine scrubbing, a carbon capture rate, which indicates the ratio of the carbon dioxide captured to the amount of carbon introduced into the process, between 50 and 65% or more than 90% can be achieved. If the hydrogen is produced with little flue gas formation, as is the case with processes based on autothermal reforming or partial oxidation plants that include a fired heater, amine scrubbing of the synthesis gas can achieve carbon capture rates of over 90%.

Disadvantages of amine scrubbing according to the prior art, however, include the high investment costs incurred for an amine scrubber and the large amount of energy required to regenerate the loaded amine scrubbing agent, which is usually covered by steam. In addition, scrubbing agent losses account for a considerable share of operating costs when scrubbing a flue gas.

High carbon capture rates of more than 90% at substantially lower cost than is possible using amine scrubbing may be obtained in processes including a pressure swing adsorption step in which a fraction depleted in carbon dioxide and a fraction enriched in carbon dioxide and containing water may be obtained, wherein a carbon dioxide fraction is obtained by cryogenic separation of the latter. Such processes may include a water-gas shift step which may be performed in different configurations.

A "buffer unit" as understood herein may particularly comprise one or more pressure vessels such as cylindrical containers and inlet/outlet equipment such as inlet and outlet valves and corresponding control means. Buffer units as used herein may comprise any means suitable for storing, and therefore buffering, gas, particularly at an elevated pressure. Buffer units as used herein may may comprise one or more containers with a fixed storage volume, such as cylindrical storage tanks or cylinder bundles, and underground reservoirs. However, alternatively or additionally, one or more containers with an adjustable storage volume, particularly gas holders or gasometers, such as water-sealed gas holders, may be used.

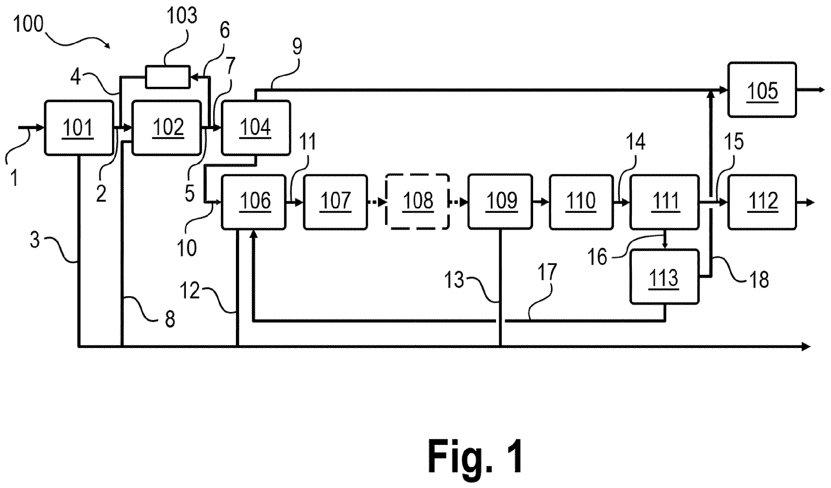

Figure 1 illustrates an overview of a process 100 for treating a gas mixture containing carbon dioxide. In the process, a buffer unit 103 is used, which is provided according to embodiments proposed herein and which is not present in conventional processes.

In process 100, a feed stream formed from a gas mixture containing carbon dioxide, e.g., a flue gas from a lime kiln, is indicated with reference numeral 1. The feed stream 1 is cooled using a cooling unit 101, e.g., a direct contact cooler. A cooled gas stream 2 is passed to a first compressor unit 102 and a wastewater stream 3 is withdrawn from the cooling unit 1. A gas stream 4 from a buffer unit 103, which is provided according to an embodiment disclosed herein, may temporarily also be passed to the first compressor unit 102. In first compressor unit 102, gas stream 2 and, temporarily, gas stream 4, is or are compressed to form a compressed gas stream 5, from which a partial stream 6 may temporarily be passed to the buffer unit 103, in which case a remainder stream 7 may be passed on to a first pressure swing adsorption unit 104. If no partial stream 6 is passed to the buffer unit 103, the whole of gas stream 5 may be passed, in the form of stream 7, to the first pressure swing adsorption unit 104. A further wastewater stream 8 is formed in first compressor unit 102.

First pressure swing adsorption unit 104 serves as a carbon dioxide enrichment unit and forms, as known per se, a stream 9 depleted in carbon dioxide vis-à-vis stream 7 and a stream 10 enriched in carbon dioxide vis-à-vis stream 7. Stream 9 is passed on to an expander unit 105 and therefrom to the atmosphere, while stream 10 is passed on to a second compressor unit 106. The expander unit 105 can also be coupled to one of the compressor units 102, 106, 112 (see also below) as a compander to minimize losses. A further compressed stream 11 is formed in second compressor unit 106 and is passed on, via optional further process units 107, 108, 109, to a dryer unit 110. In second compressor unit 106 and, optionally, in further process unit 109, or any of further process units 107, 108, 109, further wastewater streams 12, 13 are formed and combined with wastewater streams 3 and 8 to form a combined wastewater stream which is passed to the border limit.

A dried stream 14 withdrawn from dryer unit 110 is supplied to a cryogenic separation unit 111 forming a carbon dioxide stream 15. The stream 15 can be obtained in gaseous or liquid form. If gaseous carbon dioxide is to be produced, typically the stream is further compressed in a third compressor unit 112 and passed to the border limit, and a remainder stream 16 is supplied to a second pressure swing adsorption unit 113 to recover carbon dioxide. A stream 17 enriched in carbon dioxide vis-à-vis stream 16 is recycled to second compressor unit 106 and a stream 18 depleted in carbon dioxide vis-à-vis stream 16 is passed to expander unit 105 and therefrom to the atmosphere.

Processes including a combination of adsorptive and cryogenic steps, such as process 100 without a buffer unit 103 as proposed herein may be difficult to operate stably under changing conditions with regard to the carbon content in the gas mixture treated. Changing, i.e., transient, conditions occur, for example, in particular in lime production, where one or more reactors, e.g. so-called Maerz Parallel Flow Reactors, are often operated. In this case, the reactor(s) pass through two operating states, one in combustion mode (high carbon dioxide content) and the other in reversal mode (low carbon dioxide content, down to zero), where air flows through the reactor. The different operating conditions result in a characteristic profile of the flue gas with a changing carbon dioxide content and a simultaneously fluctuating flue gas flow.

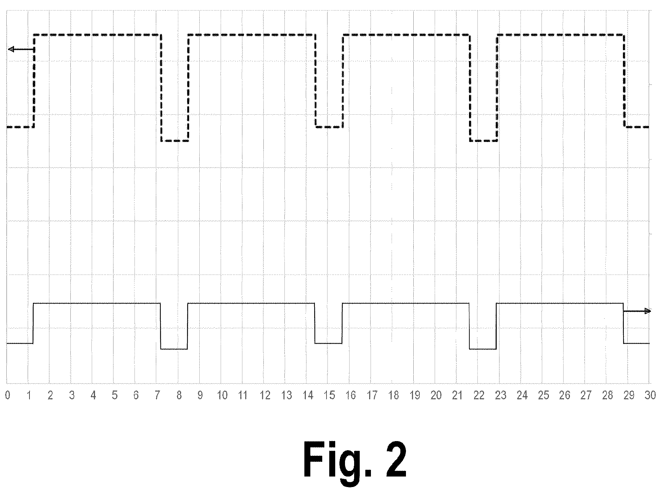

Figure 2 illustrates properties of a flue gas of such a reactor, wherein a time in minutes is indicated on the horizontal axis while a total flue gas flow (top graph) and a carbon dioxide content thereof (bottom graph) is indicated on the vertical axis.

Transient flue gas conditions, e.g. with fluctuating carbon dioxide contents in the flue gas and/or with simultaneously fluctuating volume flows of the flue gas as shown in Figure 2, represent a problem both for the operation of the machines (compressors units) 102, 106, 112 and for the pressure swing adsorption units 104, 113, as well as for the cryogenic separation unit 111, e.g., as shown in Figure 1 for process 100 when buffer unit 103 is not provided. This is eliminated by providing buffer unit 103 as proposed herein, with which a stable operation of the process 100 can be achieved. This includes, at the very least, that the operation of the process 100 or a corresponding plant can be maintained.

In more detail, by combining buffer unit 103 at a suitable location of the process 100 and a method of operating this buffer unit 103, the instationary operating conditions can be equalised to such an extent that advantageous, because approximately stationary, operation of the process 100 or plant is possible. Herein, the term "equalised" particularly should be understood to mean that both the carbon dioxide content and the flow to the first pressure swing adsorption unit 104 are approximately constant, i.e. do not vary by more than 40%, 25%, 10% or 5%.

Buffer unit 103 may, in embodiments proposed herein, be installed in parallel to the first compressor unit 102 and first compressor unit 102 may comprise different stages which may be operated in the basis of a compressor load control unit and pressure and flow readings or indicators by one motor or drive.

For heat integration, a heat exchanger may be provided in a flow path of the compressed gas downstream of the first compressor unit, which may be operated using suitable gas streams. The compressed gas may be further cooled using cooling water using suitable equipment. A condensate formed may be separated and may be used to form wastewater stream 3. Gas may be resent to compression in first compression unit 102.

A further gas stream may in certain embodiments be sent from a point downstream of first compressor unit 102 back to the suction side of first compressor unit 102 in exceptional cases and for suction control. This may also be governed on the basis of a compressor load control unit.

Buffer unit 103 may be operated on the basis of an inlet side flow control adjusting partial stream 6 and an outlet side flow control adjusting stream 4. Operation of inlet side flow control and outlet side flow control may be governed on the basis of a calculated gas flow of feed stream 1 from the border limit. Particularly, set points of the inlet side flow control and the outlet side flow control may be adjusted based on a selection signal, e.g., on the basis of an external unit and/or properties of gas mixture 2.

Operating the buffer unit 103 in a "pressure swing" operation, i.e., filling buffer unit 103 from the pressure side of the first compressor, and discharging the buffer unit 103 to the suction side, makes use of the increased pressure compared to the typically pressureless feed stream. The increased pressure in turn has a positive effect on the size of the buffer unit 103 (otherwise, i.e., without pressure, buffering would be less economical). During an operating state with a high carbon dioxide content, gas of gas stream 6 is stored in the buffer unit 103. During an operating state with a low carbon dioxide content and/or a low flow of feed gas stream 1, gas stream 4 is fed from the buffer unit 103 to a position upstream of the first compressor unit 102.

On the one hand, the carbon dioxide content of the gas stream sent to first compressor unit 102 is increased by adding buffered gas of gas stream 6 rich in carbon dioxide. On the other hand, the flow to the first compressor unit 102 is prevented from dropping so low that the anti-surge protection control intervenes. For the typical conditions of the flue gas from one or more Maerz Parallel Flow Reactors, a sufficiently uniform flow to the carbon dioxide removal located downstream of the first flue gas compressor unit 102 can be ensured by suitably selecting the flows of streams 6 and 4 (to and from the buffer unit 103) so that stable operation of the overall process 100 or plant can be guaranteed at any or most times.

One advantage of the process 100 proposed herein is the fact that equipment, in particular the first compressor unit 102, does not have to be designed larger than in conventional processes. Another advantage is the fact that machines in the residual gas path of the first pressure swing adsorption 104 would otherwise have to be operated (when operating without a buffer) with a low carbon dioxide content and a low flue gas flow in the recycle (anti-surge valve open). Due to the frequent cycles (every x minutes), stable operation of the overall process would be more difficult in a process without a buffer unit 103. Furthermore, operation with an anti-surge valve that opens and closes frequently would possibly have a negative effect on its service life.

Control or regulation of the pressurisation and depressurisation of the buffer unit 103 may be performed via, for example, flue gas temperature, carbon dioxide content, and signals from a lime kiln. Variants could include to route gas discharged from the buffer unit 103 indirectly to the suction side of the first compressor unit 102, e.g., by feeding the stream further upstream of the compression, for example in front of a direct contact cooler, which is often provided before the first compression unit. Additional recycling of gas from a further downstream process step, in order to increase optimisation potential with regard to the size of buffer unit 103, and to keep the process running for long periods in the event of low to zero carbon dioxide levels, may also be envisaged. Such a gas from a further downstream process step particularly should have a carbon dioxide content similar or higher than the initial gas mixture comprising carbon dioxide and should preferably be provided at a higher pressure. As the carbon dioxide may undergo various enrichment and recycle steps in the downstream units, there are various streams having these characteristics.

## Claims

1. A process (100) for treating a gas mixture comprising carbon dioxide, wherein the gas mixture is formed from a feed gas provided to the process (100) in the first operating mode with different properties than in the second operating mode, compressed in a compression unit (102) to form a compressed gas mixture, the process comprising at least a first operating mode wherein a partial stream of the compressed gas mixture is stored in a buffer unit (103) and a second operating mode wherein a part of the compressed gas mixture stored in the buffer unit (103) in the first operating mode is withdrawn therefrom and recycled to the process (100) at a position upstream of the compression unit.

2. The process (100) according to claim 1, wherein the compression in the compression unit is a first compression step after the gas mixture has been produced, and/or cooled, and wherein the compression in the compression unit is performed from a first pressure level to a second pressure level.

3. The process (100) according to claim 2, wherein the first pressure level is a pressure level between 0.5 and 1.5 bar absolute pressure and/or the second pressure level is a pressure level between 2 and 10 bar absolute pressure.

4. The process (100) according to any one of the preceding claims, wherein different gas properties with which the gas mixture is provided to the process (100) in the first operating mode and in the second operating mode include a different amount and/or a different carbon dioxide content.

5. The process (100) according to any one of the preceding claims, wherein the process (100) includes switching from the first operating mode to the second operating mode or vice versa on the basis of an amount, pressure, temperature and/or carbon dioxide content of the gas mixture.

6. The process (100) according to any one of the preceding claims, wherein the gas mixture is formed by a gas producing unit.

7. The process (100) according to claim 6, wherein the gas producing unit is a lime kiln unit or a cement plant and the gas mixture is a flue gas therefrom.

8. The process (100) according to claim 6 or 7, wherein the process (100) includes switching from the first operating mode to the second operating mode on the basis of a signal provided by the gas producing unit.

9. The process (100) according to any one of the preceding claims, wherein at least a part of the compressed gas mixture is treated in a plurality of separation steps, the plurality of separation steps including one or more pressure swing adsorption steps and one or more cryogenic separation steps.

10. The process (100) according to claim 9, wherein the plurality of separation steps comprise a first non-cryogenic separation step, a second non-cryogenic separation step, and a cryogenic separation step, wherein the first non-cryogenic separation step and the second non-cryogenic separation step are pressure swing adsorption steps or the first non-cryogenic separation step is a pressure swing adsorption step and the second non-cryogenic separation step is a membrane separation step

11. An apparatus for treating a gas mixture comprising carbon dioxide, wherein the apparatus comprises a compression unit configured to compress the gas mixture to form a compressed gas mixture, and further comprising a buffer unit (103), wherein the apparatus is configured to be operated in a first operating mode wherein a partial stream of the compressed gas mixture is stored in the buffer unit (103) and a second operating mode wherein a part of the compressed gas mixture stored in the buffer unit (103) in the first operating mode is withdrawn therefrom and recycled to the process (100) at a position upstream of the compression unit.

12. The apparatus according to claim 11 configured to perform a method according to any one of claims 1 to 10.
